# EUROPÄISCHE PATENTSCHRIFT

(11) **EP 2 721 330 B1**
(45) Veröffentlichungstag und Bekanntmachung des Hinweises auf die Patenterteilung: **08.04.2015**
(21) Anmeldenummer: 12728234.1
(22) Anmeldetag: 14.06.2012
(51) Int. Cl.: F16K 21/18, F16K 17/36

(54) **SCHWIMMVENTIL**
FLOAT VALVE
CLAPET À FLOTTEUR

(30) Priorität: 17.06.2011 DE 202011050471 U
(43) Veröffentlichungstag der Anmeldung: 23.04.2014
(73) Patentinhaber: ATB Umwelttechnologien GmbH, 32457 Porta Westfalica (DE)
(72) Erfinder: BAUMANN, Markus, 32547 Bad Oeynhausen (DE)
(74) Vertreter: Ter Meer Steinmeister & Partner
(86) Internationale Anmeldenummer: PCT/EP2012/061277
(87) Internationale Veröffentlichungsnummer: WO 2012/171992

(56) Entgegenhaltungen:
- DE-B4-102008 033 293
- DE-C1- 3 707 271
- GB-A- 2 430 478
- US-A- 4 269 213

## Beschreibung

Die vorliegende Erfindung betrifft ein Schwimmventil gemäß dem Oberbegriff des Anspruchs 1.

Schwimmventile werden beispielsweise dazu verwendet, einen Fluidstrom in Abhängigkeit von dem Pegel des Flüssigkeitsvolumens zu steuern, in welchem das Schwimmventil schwimmend gelagert ist. Ein spezifischer Anwendungsfall sind Kleinkläranlagen, die mit verschiedenen Einrichtungen zur Abwasserbehandlung ausgestattet sind, welche mit Druckluft betrieben werden. Hierbei kann es sich beispielsweise um einen Belüfter und einen Druckluftheber zur Abförderung des Klärkammerinhalts handeln. Die Druckluftverteilung auf die verschiedenen Einrichtungen lässt sich durch ein solches Schwimmventil steuern. Überschreitet der Füllstand der Klärkammer einen vorbestimmten Pegel, ändert das Schwimmventil seinen Schaltzustand, so dass beispielsweise nicht mehr der Belüfter, sondern der Druckluftheber mit Druckluft beaufschlagt wird. Solche Ventile bieten daher eine besonders einfache Möglichkeit zur Betriebssteuerung der Anlage.

Die deutsche Patentschrift DE 10 2008 033 293 B4 zeigt beispielsweise ein Schwimmerumschaltventil mit einem Hohlkörper, in welchem ein Ventilkörper zwischen zwei Endlagen beweglich gelagert ist. Dieses Ventil weist einen Eingang und zwei Ausgänge auf. Letztere sind als Ventilsitze ausgebildet, die durch die Ventilkugel je nach Lage verschlossen werden können, so dass entweder der eine oder der andere Ausgang blockiert wird. Die Lage der Ventilkugel ist von der Kippstellung des Hohlkörpers abhängig, welcher um eine Kippachse kippbar gelagert ist, derart, dass die Kippstellung vom Flüssigkeitspegel abhängig ist. Somit bestimmt der Flüssigkeitspegel die Schaltstellung des Ventils.

Allgemein ist es erwünscht, die Einrichtungen zum Betrieb einer Kleinkläranlage möglichst einfach und unkompliziert zu halten. In diesem Sinne ist es für viele Anwendungsfälle ausreichend, die Druckluftzufuhr zu einer bestimmten Einheit dadurch zu steuern, dass man ihre Zuleitung entweder blockiert oder öffnet. Für einen solchen einfachen Anwendungsfall ist das vorstehend genannte Ventil nicht geeignet. Zudem sollen nicht mehr Ventilanschlüsse vorhanden sein als unbedingt nötig, um die Zahl der verwendeten Schläuche als Anschlussleitungen klein zu halten, unter anderem deshalb, weil das einzusetzende Schlauchmaterial hohen Ansprüchen genügen muss und einen Kostenfaktor darstellt. Außerdem stellt sich bei dem bekannten Schwimmerumschaltventil der oben beschriebenen Art das Problem, dass der Hohlkörper bei einem bestimmten kritischen Flüssigkeitspegel leicht hin und her kippen kann, so dass das Ventil ständig zwischen zwei Schaltzuständen oszilliert, während sich die Ventilkugel zwischen ihren beiden Ventilsitzen bewegt. Dies führt zu einem instabilen Zustand der Anlage, der steuerungstechnisch unerwünscht ist.

Es ist daher ein Ziel der vorliegenden Erfindung, ein vereinfachtes Schwimmventil zu schaffen, das dazu geeignet ist, die Druckluftzufuhr zu einer Funktionseinheit einer Kleinkläranlage auf möglichst einfache und zuverlässige Weise und mit einer verringerten Zahl von Anschlüssen zu steuern. Ein weiteres Ziel der vorliegenden Erfindung liegt darin, ein Schwimmventil zu schaffen, das instabile Schaltzustände der oben genannten Art vermeidet.

Diese Aufgaben und Ziele werden erfindungsgemäß durch ein Schwimmventil mit den Merkmalen des Anspruchs 1 gelöst.

Der Hohlkörper des erfindungsgemäßen Schwimmventils ist röhrenförmig ausgebildet und weist außer dem Einlass lediglich einen Auslass auf. Einlass und Auslass sind an den beiden Enden des röhrenförmigen Hohlkörpers angeordnet. Der Auslass weist einen Ventilsitz auf, der in einer ersten Schaltstellung des Ventils geöffnet ist und in einer zweiten Schaltstellung vom Ventilkörper verschlossen wird. Das Ventil kann somit in eine Zuleitung zu einer Funktionseinheit einer Kleinkläranlage so eingebaut werden, dass es die Zuleitung blockiert (entsprechend der zweiten Schaltstellung) oder öffnet (entsprechend der ersten Schaltstellung).

Die Schaltstellung ist von der Neigung des Hohlkörpers abhängig. Dessen Einlassende ist zu diesem Zweck über ein Teilstück des Zuleitungsschlauchs mit der Kippachse verbunden. Befindet sich der Ventilkörper in der zweiten Schaltstellung, kann er sich bei zunehmender Neigung des Hohlkörpers dann, wenn ein oberer Neigungswinkel überschritten wird, selbsttätig in die erste Schaltstellung bewegen. Das bedeutet, dass ein Umschalten aus der zweiten Schaltstellung in die erste Schaltstellung erst bei einem oberen Grenzwinkel stattfindet. Hingegen kann sich der Ventilkörper bei abnehmender Neigung selbsttätig erst dann aus der ersten Schaltstellung in die zweite Schaltstellung bewegen, wenn ein unterer Neigungswinkel unterschritten wird.

Das Umschalten zwischen den verschiedenen Schaltstellungen findet bei unterschiedlichen Grenzwinkeln statt, so dass das erfindungsgemäße Schwimmventil eine Hysterese aufweist. Hat der Hohlkörper beispielsweise gerade den oberen Neigungswinkel überschritten, so dass das Ventil die erste Schaltstellung eingenommen hat, behält es diese zunächst auch dann bei, wenn die Neigung unmittelbar wieder abnimmt und unter den oberen Neigungswinkel fällt, und zwar so lange, bis der untere Neigungswinkel unterschritten wird. Erst dann schaltet das Ventil wieder zurück in die zweite Schaltstellung. Instabile Schaltzustände werden somit dadurch vermieden, dass die Differenz zwischen dem oberen und dem unteren Neigungswinkel ausreichend groß ist.

Im praktischen Betrieb einer Kleinkläranlage bedeutet dies, dass der obere Neigungswinkel des Hohlkörpers erst bei einem vorbestimmten oberen Flüssigkeitspegel überschritten wird, so dass das Schwimmventil die erste (geöffnete) Schaltstellung einnimmt und beispielsweise die Druckluftzufuhr zu einem Druckluftheber öffnet, sobald die Klärkammer einen gewissen Füllstand erreicht hat. Die Zuleitung bleibt so lange offen, bis der Flüssigkeitspegel bis zu einem vorbestimmten unteren Wert gesunken ist, bei welchem der Hohlkörper den unteren Neigungswinkel erreicht. Dann wird die Druckluftzufuhr zum Heber wieder blockiert, und das Abfördern von Flüssigkeit aus der Klärkammer wird beendet.

Gemäß einer besonderen Ausführungsform der vorliegenden Erfindung ist der Ventilkörper eine Kugel, und der Hohlkörper weist an seinem Einlassende einen Anschlag für die Kugel auf. Dieser Anschlag kann die Kugel in einer Position halten, in der der Einlass des Hohlkörpers geöffnet bleibt.

Vorzugsweise sind die Kugel und der Anschlag magnetisch oder bestehen aus einem magnetisierbaren Material.

Die Kugel kann in diesem Fall magnetisch am Anschlag haften, so dass ein vorzeitiges Zurückrollen der Kugel zum Ventilsitz auch bei einem Kippen des Hohlkörpers in Richtung des unteren Neigungswinkels zunächst verhindert wird. Wird der untere Neigungswinkel unterschritten, ist die in Richtung des Ventilsitzes wirkende Komponente der Schwerkraft größer als die magnetische Haltekraft, und die Kugel löst sich vom Anschlag und rollt in Richtung Ventilsitz.

Gemäß einer weiteren bevorzugten Ausführungsform weist der Hohlkörper einen Knick oder eine Krümmung auf. Dieser Knick oder die Krümmung bieten ein Hindernis auf der Bahn des Ventilkörpers zwischen den verschiedenen Schaltstellungen.

Vorzugsweise weist der Hohlkörper zwei Rohrschenkel auf, die in einem Winkel zueinander stehen. In diesem Fall wird der obere Neigungswinkel dann erreicht, wenn der Schenkel des Auslassendes des Hohlkörpers die horizontale Stellung überschritten hat und der Ventilkörper entlang dieses Schenkels über die Verbindungsstelle hinweg in den anderen Schenkel zum Einlassende gleiten kann. Hingegen wird der untere Neigungswinkel dann erreicht, wenn der Schenkel des Einlassendes die horizontale Lage erreicht hat und der Ventilkörper in umgekehrter Richtung zum Ventilsitz gleiten kann. Die Differenz zwischen dem oberen und dem unteren Neigungswinkel wird somit durch den Winkel zwischen dem Rohrschenkeln festgelegt.

Weiter vorzugsweise umfasst das Schwimmventil einen zusätzlichen Schwimmkörper, der an der Außenseite des Hohlkörpers befestigt ist. Dieser zusätzliche Schwimmkörper begünstigt die Schwimmfähigkeit des Hohlkörpers.

Gemäß einer bevorzugten Ausführungsform der Erfindung umfasst das Schwimmventil einen elektrischen Schalter, der durch die Bewegung des Ventilkörpers beim Kippen des Hohlkörpers in die erste Schaltstellung schließbar ist. Beispielsweise kann dieser elektrische Schalter am Anschlag für den kugelförmigen Ventilkörper angebracht sein und mechanisch geschlossen werden, sobald der Ventilkörper den Anschlag erreicht. Dann kann ein Schaltimpuls ausgelöst werden, der beispielsweise zur Steuerung der Druckluftquelle verwendet wird und deren Betriebszustand ändert.

Gemäß einem weiteren Aspekt betrifft die vorliegende Erfindung die Anordnung eines Schwimmventils der erfindungsgemäßen Art in einem Flüssigkeitsvolumen, in welchem das Schwimmventil schwimmend gelagert ist, derart, dass der Hohlkörper bei einer Veränderung des Flüssigkeitspegels in Bezug auf die Kippachse eine Kippbewegung durchführt und der Ventilkörper bei Überschreiten eines vorbestimmten oberen Flüssigkeitspegels die erste Schaltstellung einnimmt und bei Unterschreiten eines vorbestimmten unteren Flüssigkeitspegels, der niedriger ist als der obere Flüssigkeitspegel, die zweite Schaltstellung einnimmt.

Vorzugsweise umfasst diese Anordnung eine Druckluftquelle, die über den Zuleitungsschlauch mit dem Einlassende des Hohlkörpers verbunden ist, und der elektrische Schalter ist dazu vorgesehen, einen Schaltimpuls zur Änderung des Betriebszustandes des Druckluftquelle zu erzeugen, wenn er durch die Bewegung des Ventilkörpers in die erste Schaltstellung geschlossen wird.

Im folgenden wird ein bevorzugtes Ausführungsbeispiel der Erfindung anhand der Zeichnung näher erläutert.

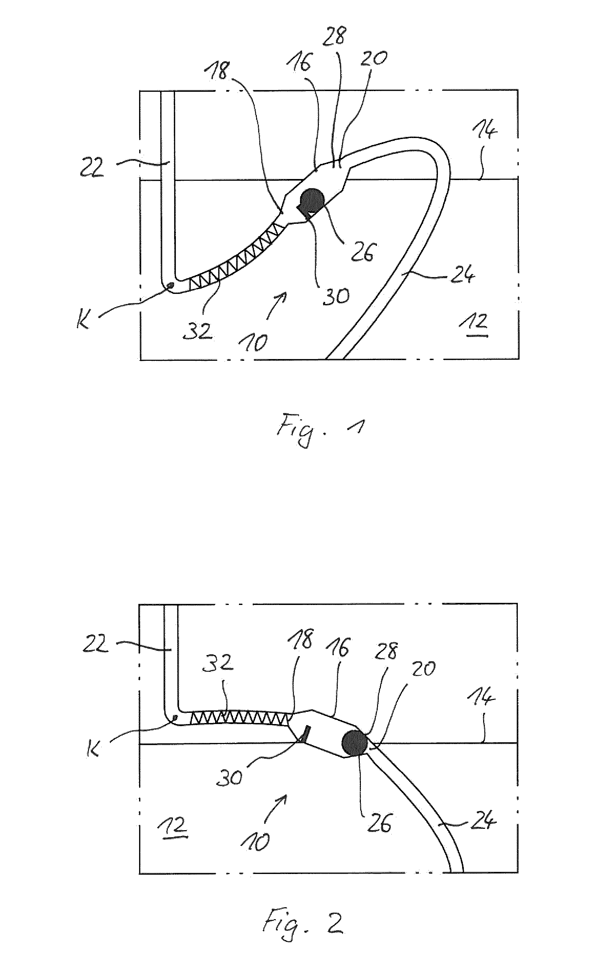

- Fig. 1 und 2: sind schematische Darstellungen einer Ausführungsform des erfindungsgemäßen Schwimmventils in zwei verschiedenen Schaltzuständen.

Fig. 1 zeigt das Schwimmventil 10 in einem Flüssigkeitsvolumen 12 schwimmend, dessen Flüssigkeitspegel mit 14 bezeichnet ist. Das Schwimmventil 10 umfasst einen röhrenförmigen Hohlkörper 16 mit einem Einlass 18 und einem Auslass 20, die an den Enden des Hohlkörpers 16 vorgesehen sind. Das Schwimmventil 10 ist in eine Druckluftleitung integriert, die von einer nicht dargestellten Druckluftquelle zu einer Einrichtung zur Behandlung von Abwasser führt, die ebenfalls nicht dargestellt ist und bei welcher es sich beispielsweise um einen Klarwasserheber einer biologischen Klärvorrichtung handeln kann. Ein stromaufwärts des Schwimmventils 10 liegender Abschnitt dieser Druckluftleitung ist in den Figuren mit 22 bezeichnet, während der stromabwärts des Ventils 10 gelegene Abschnitt die Bezugsziffer 24 trägt. Druckluft strömt somit durch den ersten Abschnitt 22, durch den Einlass 18 in den Hohlkörper 16 und durch den Auslass 20 in den folgenden Abschnitt 24.

Innerhalb des Hohlkörpers 16 ist ein Ventilkörper 26 in Form einer Ventilkugel beweglich gelagert. Der Auslass 20 umfasst einen Ventilsitz 28, der durch die Ventilkugel 26 verschließbar ist. In der Nähe des Einlasses 18 ist ein Anschlag 30 für die Ventilkugel 26 angeordnet, der verhindert, dass die Ventilkugel 26 den Einlass 18 blockiert. Fig. 1 zeigt das Schwimmventil 10 in seiner geöffneten Stellung, in der Ventilkugel 26 am Anschlag 30 anliegt und die Druckluft das Schwimmventil 10 frei durchströmen kann. Hingegen ist in der Stellung in Fig. 2 der Ventilsitz 28 durch die Ventilkugel 26 blockiert, und das Schwimmventil 10 schließt die Druckluftleitung. Die verschiedenen Situationen in Fig. 1 und 2 stellen somit unterschiedliche Schaltstellungen des Schwimmventils 10 dar, nämlich eine erste Schaltstellung in Fig. 1, in der das Schwimmventil 10 geöffnet ist, und eine zweite Schaltstellung in Fig. 2, in der das Schwimmventil 10 geschlossen ist.

Der Hohlkörper 16 ist um eine Kippachse K kippbar gelagert. Im einzelnen ist der Einlass 18 des Hohlkörpers 16 über ein flexibles Teilstück 32 des Zuleitungsschlauchs 22 mit der Kippachse K verbunden. Der Schwimmkörper 16 kann somit eine Kippbewegung durchführen, während er mit steigendem oder fallendem Flüssigkeitspegel 14 angehoben oder abgesenkt wird. Fig. 1 zeigt eine Situation mit höherem Flüssigkeitspegel 14, in der die Kippachse K unterhalb des Flüssigkeitspegels 14 liegt und der Hohlkörper 16 sich aufgrund seines Auftriebs in einer angehobenen Stellung befindet. Seine Rohrachse ist gegenüber der horizontalen Stellung um ca. 45° nach oben geneigt, und der Auslass 20 mit dem Ventilsitz 28 liegt wesentlich höher als der Einlass 18 und der Anschlag 30. Die Ventilkugel 26 wird daher durch ihr Eigengewicht am Anschlag 30 gehalten, und der Auslass 20 ist geöffnet.

In Fig. 2 liegt hingegen der Flüssigkeitspegel 14 unterhalb der Kippachse K, und der Hohlkörper 16 befindet sich in einer leicht abwärts geneigten Position, in der die Rohrachse in einem negativen Neigungswinkel von etwa -10° gegenüber der horizontalen Ebene geneigt ist. In dieser Stellung liegt der Auslass 20 tiefer als der Einlass 18, und die Ventilkugel 26 liegt aufgrund ihres Eigengewichts am Ventilsitz 28 an und blockiert diesen.

Im hier dargestellten Ausführungsbeispiel ist der Hohlkörper 16 als Rohr mit zylindrischen Rohrwänden ausgebildet, so dass eine Kugel innerhalb des Rohrs leicht von einem Rohrende zum anderen rollen kann, sofern dieses gegenüber der horizontalen Stellung leicht geneigt wird. Wird der Hohlkörper 16 daher bei steigendem Flüssigkeitspegel 14 aus der Situation in Fig. 2 angehoben, rollt die Ventilkugel 26 dann, wenn der Hohlkörper 16 die horizontale Lage überschreitet und eine positive Neigung annimmt, vom Ventilsitz 28 zum Anschlag 30. Diese Situation wird dann erreicht, wenn aufgrund des steigenden Flüssigkeitspegels 14 der Auslass 20, der von der Kippachse K weiter entfernt ist als der Einlass 18, über die Höhe des Einlasses 18 hinweg angehoben wird und somit ein Gefälle innerhalb des Hohlkörpers 16 erzeugt wird. Die horizontale Stellung des Hohlkörpers 16 mit einem Neigungswinkel von 0° stellt damit einen oberen Grenzwinkel dar, bei dessen Überschreiten sich die Ventilkugel 26 selbsttätig aus der zweiten Schaltstellung in die erste Schaltstellung bewegen kann.

Sinkt der Flüssigkeitspegel 14 wieder ab, verringert sich auch der Neigungswinkel des Hohlkörpers 16 wieder. Allerdings rollt die Ventilkugel 26 auch dann, wenn der obere Grenzwinkel bereits leicht unterschritten worden ist und eine Neigung vom Anschlag 30 zum Ventilsitz 28 erzeugt worden ist, nicht unmittelbar wieder in Richtung des Auslasses 20. Dies wird dadurch erreicht, dass sowohl die Kugel als auch der Anschlag magnetisch sind oder magnetisierbare Materialien beinhalten. Beispielsweise kann die Ventilkugel 26 einen Permanentmagneten beinhalten, während der Anschlag 30 metallisch ist und von der Ventilkugel 26 angezogen wird. Aufgrund dieser magnetischen Anziehung haftet die Kugel 26 am Anschlag 30, und die Magnetkraft hält die Ventilkugel 26 auch bei einer leichten Neigung des Ventilkörpers 16 nach unten in Richtung des Auslasses 20. Erst bei stärkerer Abwärtsneigung in eine Position, in der der Ventilsitz 28 deutlich niedriger liegt als der Einlass 18, wird die Komponente der Schwerkraft, die in Richtung des Ventilsitzes 28 entlang der Rohrachse wirkt, stärker als die Magnetkraft, und die Kugel 26 rollt zum Ventilsitz 28. Das heißt, dass sich während einer Abwärtsbewegung des Hohlkörpers 16 bei fallendem Flüssigkeitspegel 14 die Ventilkugel 26 erst dann selbsttätig aus der ersten (geöffneten) Schaltstellung in die zweite (geschlossene) Schaltstellung bewegen kann, wenn ein bestimmter unterer Neigungswinkel unterschritten wird. Dieser ist deutlich kleiner als der obere Neigungswinkel, der einer horizontalen Stellung des Ventilkörpers 16 entspricht. Die Hysterese des Schwimmventils 10 kann auch durch andere Maßnahmen erreicht werden, etwa dadurch, dass der Hohlkörper 16 kein gerades Rohr ist, sondern einen Knick oder eine Krümmung aufweist, die von der Ventilkugel 26 auf ihrem Weg zwischen dem Anschlag 30 und dem Ventilsitz 28 überwunden werden muss. Beispielsweise kann der Hohlkörper 16 zwei miteinander verbundene Rohrschenkel umfassen, die in einem Winkel zueinander stehen. Befindet sich die Ventilkugel 26 bei relativ niedrigem Flüssigkeitsspiegel 14 (entsprechend etwa Fig. 2) im Ventilsitz 28 und damit in der zweiten Schaltstellung, rollt sie erst dann in Richtung des Anschlags 30, wenn der Rohrschenkel am Ende des Auslasses 20 die horizontale Lage überschritten hat und ein Gefälle in Richtung des Einlasses 18 aufweist. Die Kugel rollt dann aufgrund ihres Eigengewichts gegen den Anschlag 30, wie vorstehend beschrieben. Umgekehrt kann die Kugel 26 allerdings während einer darauffolgenden Abwärtsbewegung erst dann wieder in Richtung des Auslasses 20 rollen, wenn der Rohrschenkel am Ende des Einlasses 18 die horizontale Lage unterschritten hat und leicht abwärts in Richtung des Auslasses 20 geneigt ist. Diese Stellung stellt dann den unteren Neigungswinkel des Hohlkörpers 16 dar, der sich deutlich von dem oberen Neigungswinkel unterscheidet, bei welchem die Kugel vom Auslass 20 zum Einlass 18 rollt.

Falls der Hohlkörper 16 selbst nicht genug Auftrieb erzeugt, kann das Schwimmventil 10 zusätzliche Schwimmkörper umfassen, die außen am Hohlkörper 16 angebracht sind.

## Patentansprüche

1. Schwimmventil (10),
umfassend einen Hohlkörper (16), der um eine Kippachse (K) zwischen einem oberen und einem unteren Neigungswinkel kippbar gelagert ist, sowie einen Ventilkörper (26), der im Hohlkörper (16) zwischen einer ersten und einer zweiten Schaltstellung beweglich gelagert ist,
sowie einen zu einem Einlass (18) des Hohlkörpers (16) führenden flexiblen Zuleitungsschlauch,
**dadurch gekennzeichnet, dass** der Hohlkörper röhrenförmig ausgebildet ist und lediglich einen Auslass (20) umfasst, der an einem Ende des Hohlkörpers (16) angeordnet ist, während der Einlass (18) am gegenüberliegenden Ende des Hohlkörpers (16) angeordnet ist, und dass der Auslass einen Ventilsitz (28) aufweist, der in einer ersten Schaltstellung geöffnet ist und in einer zweiten Schaltstellung vom Ventilkörper (26) verschlossen wird,
wobei das Einlassende des Hohlkörpers (16) über ein Teilstück (32) des Zuleitungsschlauchs mit der Kippachse (K) verbunden ist, derart, dass der Ventilkörper (26) sich während einer Aufwärtsbewegung selbsttätig aus der zweiten Schaltstellung in die erste Schaltstellung bewegen kann, wenn ein oberer Neigungswinkel überschritten wird, und sich während einer Abwärtsbewegung selbsttätig aus der ersten Schaltstellung in die zweite Schaltstellung bewegen kann, wenn ein unterer Neigungswinkel unterschritten wird, der sich vom oberen Neigungswinkel unterscheidet.

2. Schwimmventil gemäß Anspruch 1, **dadurch gekennzeichnet, dass** der Ventilkörper (26) eine Kugel ist, und dass der Hohlkörper (16) an seinem Einlassende einen Anschlag (30) für die Kugel (26) aufweist.

3. Schwimmventil gemäß Anspruch 2, **dadurch gekennzeichnet, dass** die Kugel (26) und der Anschlag (30) magnetisch sind oder aus einem magnetisierbaren Material bestehen.

4. Schwimmventil gemäß einem der vorhergehenden Ansprüche, **dadurch gekennzeichnet, dass** der Hohlkörper (16) einen Knick oder eine Krümmung aufweist.

5. Schwimmventil gemäß Anspruch 4, **dadurch gekennzeichnet, dass** der Hohlkörper (16) zwei Rohrschenkel umfasst, die in einem Winkel zueinander stehen.

6. Schwimmventil gemäß einem der vorhergehenden Ansprüche, gekennzeichnet durch einen zusätzlichen Schwimmkörper, der an der Außenseite des Hohlkörpers befestigt ist.

7. Schwimmventil gemäß einem der vorhergehenden Ansprüche, gekennzeichnet durch einen elektrischen Schalter, der durch eine Bewegung des Ventilkörpers (26) beim Kippen des Hohlkörpers (16) in die erste Schaltstellung schließbar ist.

8. Anordnung eines Schwimmventils (10) gemäß einem der vorhergehenden Ansprüche in einem Flüssigkeitsvolumen (12), in welchem das Schwimmventil (10) schwimmend gelagert ist, derart, dass der Hohlkörper (16) bei einer Veränderung des Flüssigkeitspegels (14) in Bezug auf die Kippachse (K) eine Kippbewegung durchführt und der Ventilkörper (26) bei Überschreiten eines vorbestimmten oberen Flüssigkeitspegels (14) die erste Schaltstellung einnimmt und bei Unterschreiten eines vorbestimmten unteren Flüssigkeitspegels (14), der niedriger ist als der obere Flüssigkeitspegel, die zweite Schaltstellung einnimmt.

9. Anordnung gemäß Anspruch 8 in Verbindung mit Anspruch 7, umfassend eine Druckluftquelle zur Druckluftbeaufschlagung des Hohlkörpers (16) über den Zuleitungsschlauch, deren Betrieb durch einen Schaltimpuls steuerbar ist, der durch eine Veränderung der Schaltstellung des elektrischen Schalters erzeugbar ist.

## Claims

1. Floating valve (62),
comprising a hollow body (16) that is supported tiltable around a tilting axis (K) between an upper and a lower tilting angle, and a valve body (26) supported movable within the hollow body (16) between a first and a second switching position,
and a flexible inlet hose leading to an inlet (18) of the hollow body (16),
**characterized in that** the hollow body is provided in a tube shape and comprises only one outlet (20) disposed at one end of the hollow body (16), while the inlet (16) is disposed at the opposite end of the hollow body (16), and the outlet comprising a valve seat (28) being opened in a first switching position and closed in a second switching position of the valve body (26),
wherein the inlet end of the hollow body (16) is connected via a section (32) of the inlet hose with the tilting axis (K) in a way that the valve body (26) is movable in a lifting movement automatically from a second switching position into the first switching position if an upper tilting angle is exceeded, and automatically movable in a lowering movement from the first switching position into the second switching position when a lower tilting angle is undercut, which is different from the upper tilting angle.

2. Floating valve according to claim 1, **characterized in that** the valve body (26) is a ball, and the hollow body (16) comprises a stopper (30) at its inlet end for the ball (26).

3. Floating valve according to claim 2, **characterized in that** the ball (26) and the stopper (30) are magnetic or consist of a magnetizable material.

4. Floating valve according to one of the preceding claims, **characterized in that** the hollow body (16) comprises a kink or a bend.

5. Floating valve according to claim 4, **characterized in that** the hollow body (16) comprises two tube legs that include an angle between each other.

6. Floating valve according to one of the preceding claims, **characterized by** an additional floating body that is attached to the outside of the hollow body,

7. Floating valve according to one of the preceding claims, **characterized by** an electric switch that can be closed into the first switching position by moving the valve body (26) during the tilting of the hollow body (16).

8. Arrangement of a floating valve (10) according to one of the preceding claims within a liquid volume (12), in which the floating valve (10) is disposed in a swimming manner, in a way that the hollow body (16) performs a tilting movement when the liquid level (14) changes relative to the tilting axis (K), and the valve body (26) takes the first switching position when a predetermined upper liquid level (14) is exceeded, and takes the second switching position if a predetermined lower liquid level (14), which is lower than the upper liquid level, is undercut.

9. Arrangement according to claim 8 in connection with claim 7, comprising a pressurized air source for pressurising the hollow body (16) via the inlet hose, wherein the operation of the pressurized air source is controllable by a switching trigger that can be generated by a change of the switching position of the electric switch.

## Revendications

1. Clapet flottant (10),
comportant un corps creux (16) qui est monté de manière à pouvoir basculer autour d'un axe de basculement (K) entre un angle d'inclinaison supérieur et un angle d'inclinaison inférieur, ainsi qu'un corps de clapet (26) qui est monté de manière à pouvoir se déplacer dans le corps creux (16) entre une première et une seconde position de commutation,
ainsi qu'un tuyau d'alimentation souple menant jusqu'à une entrée (18) du corps creux (16),
**caractérisé en ce que** le corps creux est formé de manière tubulaire et inclut uniquement une sortie (20) qui est agencée sur une extrémité du corps creux (16), alors que l'entrée (18) est agencée sur l'extrémité opposée du corps creux (16), et **en ce que** la sortie comporte un siège de clapet (28) qui est ouvert dans une première position de commutation et fermé par le corps de clapet (26) dans une seconde position de commutation,
dans lequel l'extrémité d'entrée du corps creux (16) est relié à l'axe de basculement (K) par l'intermédiaire d'une pièce partielle (32) du tuyau d'alimentation, de telle sorte que le corps de clapet (26) peut se déplacer automatiquement pendant un mouvement vers le haut à partir de la seconde position de commutation jusqu'à la première position de commutation, lorsqu'un angle d'inclinaison supérieur est franchi, et peut se déplacer automatiquement pendant un mouvement vers le bas à partir de la première position de commutation jusqu'à la seconde position de commutation, lorsqu'un angle d'inclinaison inférieur différent de l'angle d'inclinaison supérieur est franchi.

2. Clapet flottant selon la revendication 1, **caractérisé en ce que** le corps de clapet (26) est une bille, et **en ce que** le corps creux (16) comporte, au niveau de son extrémité d'entrée, une butée (30) pour la bille (26).

3. Clapet flottant selon la revendication 2, **caractérisé en ce que** la bille (26) et la butée (30) sont magnétiques ou sont constituées d'un matériau pouvant être aimanté.

4. Clapet flottant selon l'une des revendications précédentes, **caractérisé en ce que** le corps creux (16) comporte un coude ou une courbure.

5. Clapet flottant selon la revendication 4, **caractérisé en ce que** le corps creux (16) inclut deux branches de tuyau qui sont à un certain angle l'une par rapport à l'autre.

6. Clapet flottant selon l'une des revendications précédentes, **caractérisé par** un corps flottant supplémentaire qui est fixé sur le côté extérieur du corps creux.

7. Clapet flottant selon l'une des revendications précédentes, **caractérisé par** un commutateur électrique qui peut être fermé dans la première position de commutation par un mouvement du corps de clapet (26) lors du basculement du corps creux (16).

8. Agencement d'un clapet flottant (10) selon l'une des revendications précédentes dans un volume de liquide (12), dans lequel le clapet flottant (10) est monté de manière flottante de telle sorte que le corps creux (16) exécute un mouvement de basculement par rapport à l'axe de basculement (K) lorsque le niveau de liquide (14) varie, et le corps de clapet (26) occupe la première position de commutation lorsqu'un niveau de liquide supérieur prédéterminé (14) est franchi, et occupe la seconde position de commutation lorsqu'un niveau de liquide inférieur prédéterminé (14) est franchi, lequel niveau de liquide inférieur est plus bas que le niveau de liquide supérieur.

9. Agencement selon la revendication 8 en liaison avec la revendication 7, comportant une source d'air comprimé pour appliquer de l'air comprimé au corps creux (16) par l'intermédiaire du tuyau d'alimentation, dont le fonctionnement peut être commandé par une impulsion de commutation qui peut être générée par un changement de la position de commutation du commutateur électrique.
